# EUROPÄISCHE PATENTSCHRIFT

(11) **EP 1 143 290 B1**
(45) Veröffentlichungstag und Bekanntmachung des Hinweises auf die Patenterteilung: **11.05.2005**
(21) Anmeldenummer: 01107590.0
(22) Anmeldetag: 27.03.2001
(51) Int. Cl.: G03B 15/03, G08G 1/01, G03B 15/05

(54) **Blitzlampe zur Verwendung in photographischen Verkehrsüberwachungs-Anlagen**
Flashlamp for use in a photographic traffic monitoring system
Lampe à éclair employée dans un système photographique de surveillance de trafic

(30) Priorität: 04.04.2000 DE 20006197 U
(43) Veröffentlichungstag der Anmeldung: 10.10.2001
(73) Patentinhaber: ROBOT Visual Systems GmbH, 40789 Monheim (DE)
(72) Erfinder: Fuchs, Helmut, 71686 Remseck (DE)
(74) Vertreter: Weisse, Jürgen, Dipl.-Phys.

(56) Entgegenhaltungen:
- PATENT ABSTRACTS OF JAPAN vol. 013, no. 412 (P-932), 12. September 1989 (1989-09-12) & JP 01 152436 A (NIKON CORP), 14. Juni 1989 (1989-06-14)
- PATENT ABSTRACTS OF JAPAN vol. 011, no. 129 (P-570), 23. April 1987 (1987-04-23) & JP 61 272728 A (CANON INC), 3. Dezember 1986 (1986-12-03)

## Beschreibung

### Technisches Gebiet

Die Erfindung betrifft eine Anlage zur Verkehrsüberwachung zur Feststellung einer Übertretung von Verkehrsvorschriften enthaltend eine Kamera zum zur Erzeugung einer Aufnahme eines Fahrzeugs als Beweis für die Übertretung und eine Blitzlampe zum Ausleuchten dieser Aufnahme.

### Zugrundeliegender Stand der Technik

Photographische Verkehrsüberwachungs-Anlagen haben die Aufgabe, Übertretungen der Verkehrsvorschriften festzustellen und photographisch zu dokumentieren. Es kann sich dabei um die Feststellung der Überschreitung einer zulässigen Höchstgeschwindigkeit oder um die Überwachung von Ampelanlagen handeln. Bei solchen photographischen Verkehrsüberwachungs-Anlagen wird eine photographische Aufnahme des überwachten Fahrzeugs gemacht. Diese Aufnahme zeigt das Kennzeichen des Fahrzeugs und ggf. den Fahrer. Außerdem werden auf den Film Meßdaten (Zeit, Tag, ggf. Geschwindigkeit) eingespiegelt. Auf diese Weise ergibt sich ein gerichtsverwertbarer Beweis für die Übertretung.

Zur Ausleuchtung der Aufnahme wird eine Blitzlampe ausgelöst. Die Blitzlampe enthält eine Blitzleuchte in einem Reflektor. Die Blitzlampe erzeugt bei bekannten Anlagen zur Verkehrsüberwachung einen Lichtkegel mit einem relativ großen Öffnungswinkel.

Ein solcher großer Öffnungswinkel, der über das überwachte Fahrzeug hinausgeht, ist nachteilig. Das Blitzlicht belästigt die Anwohner. Das fuhrt zu Problemen insbesondere bei stationären Verkehrsüberwachungs-Anlagen. Das Blitzlicht kann andere, unbeteiligte Verkehrsteilnehmer irritieren und blenden. Außerdem ist der Blitz u.U. weithin sichtbar, wenn er auch die Umgebung des überwachten Fahrzeugs ausleuchtet. Dadurch werden andere Fahrzeuge, die auch mit überhöhter Geschwindigkeit fahren, schon von weitem gewarnt. Dadurch hervorgerufene Bremsreaktionen der Fahrer können zu Unfällen führen.

Durch die JP 2526945 B ist (Patent Abstracts of Japan Bd. 013, No. 412 (P-932)) ist eine Blitzleuchte für photographische Zwecke bekannt, bei welcher ein Photo "reich an Atmosphäre" erzeugt werden soll, indem vor einer stabförmigen Blitzleuchte ein Gitter angeordnet ist. Dieses Gitter läßt die längs der optischen Achse verlaufenden Strahlen glatt durch, vignettiert aber die achsfemen Strahlen um so mehr, je größer ihr Winkel mit der optischen Achse ist. Dadurch wird die Aufnahme zum Rand hin zunehmend dunkler.

Die JP 61272728 A (Patent Abstracts of Japan Bd 011, No 129 (P-570)) beschreibt eine Blitzleuchte mit einem Linsenraster von kleinen Linsen aus einem gummielastischem Material, dessen Form zur Veränderung des Abstrahlwinkels verändert werden kann.

### Offenbarung der Erfindung

Der Erfindung liegt die Aufgabe zu Grunde bei einer Anlage zur Verkehrsüberwachung der eingangs genannten Art Störungen und Warnung Dritter durch die Blitzbeleuchtung zu vermeiden oder zu reduzieren.

Erfindungsgemäß wird diese Aufgabe durch die Merkmale des Patentanspruchs 1 gelöst.

Eine vorteilhalte ausgestaltung des Erfindung ist gegenstand des Patentanspruchs 2.

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt eine Seitenansicht -teilweise im Schnitt- einer Blitzlampe für eine photographische Verkehrsüberwachungs-Anlage.
- Fig.2: ist eine abgebrochene Vorderansicht der Blitzlampe mit einem "Wabenfilter".

### Bevorzugte Ausführung der Erfindung

Eine Blitzlampe 10 für eine Verkehrsüberwachungs-Anlage weist ein Gehäuse 12 auf. In dem Gehäuse 12 sitzt ein Reflektor 14. In dem Reflektor 14 sitzt eine Blitzleuchte 16. Stromversorgung und Ansteuerung der Blitzleuchte 16 erfolgt über ein Kabel 18. Das Gehäuse 12 ist mittels eines Sockels 20 in einer Verkehrsüberwachungs-Anlage montiert.

Das ist der übliche Aufbau einer Blitzlampe.

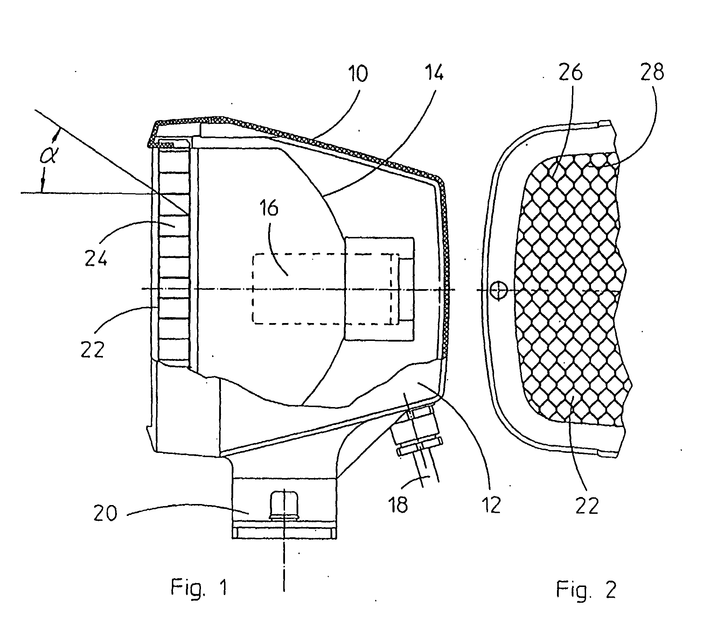

Vor dem Reflektor 14 ist in einem vorstehenden Rand des Gehäuses 12 oder in einer aufsetzbaren Halterung ein Filter 22 gehaltert. Dieses Filter 22 ist so ausgebildet, daß es den Ausstrahlungswinkel *α* des Blitzlichtes begrenzt. Zu diesem Zweck weist das Filter 22 eine wabenartige Struktur mit einer Vielzahl nebeneinander angeordneter, bündelbegrenzender Kanäle 24 auf. Wie aus Fig.2 ersichtlich ist, bildet die Struktur ein Muster von einander kreuzenden Scharen von im wesentlichen parallelen, streifenartigen Stegen 26 und 28. Stattdessen können die Kanäle auch von sechseckigen Waben gebildet sein.

Wie aus Fig.1 ersichtlich ist, wird dadurch der Ausstrahlungswinkel α des Blitzlichtes begrenzt. Das Blitzlicht fällt dadurch im wesentlichen auf das zu photographierende Fahrzeug. Die geschilderten Stör- und Warneffekte werden vermieden.

## Patentansprüche

1. Anlage zur Verkehrsüberwachung zur Feststellung einer Übertretung von Verkehrsvorschriften enthaltend eine Kamera zum zur Erzeugung einer Aufnahme eines Fahrzeugs als Beweis für die Übertretung und eine Blitzlampe (10) zum Ausleuchten dieser Aufnahme, **dadurch gekennzeichnet, daß** vor der Blitzlampe (10) eine wabenartige Struktur von nebeneinander angeordneten, bündelbegrenzenden Kanälen (24) angeordnet ist, die den Ausstrahlungswinkel (α) des Blitzlichtes so begrenzt, daß das Blitzlicht im wesentlichen auf das zu photographierende Fahrzeug fällt.

2. Anlage nach Anspruch 1, **dadurch gekennzeichnet, daß** die Struktur von einem Muster einander kreuzender, Scharen streifenförmiger Stege (26,28) gebildet ist.

## Claims

1. Installation for monitoring traffic to detect violations of traffic regulations, comprising a camera for taking a picture of a vehicle as evidence of the violation, and a flashgun (10) for lighting this picture, **characterised in that** a honeycomblike structure of side-by-side, beam-limiting passages (24) is arranged in front of the flashgun, which structure limits the beam angle (α) of the flashgun such that the flash light substantially falls on the vehicle to be photographed.

2. Installation according to claim 1, **characterised in that** the structure is formed by a pattern of mutually intersecting systems of strip-shaped webs (26,28).

## Revendications

1. Dispositif de contrôle de la circulation destiné à mettre en évidence une infraction aux règles de circulation comprenant une caméra destinée à fournir une photographie de véhicule considérée comme preuve de l'infraction et une lampe flash (10) destinée à éclairer cette photographie, **caractérisé en ce qu'**une structure alvéolaire composée de canaux (24), disposés les uns à côté des autres et limitant le faisceau, laquelle limite l'angle de rayonnement (α) du flash de sorte que le flash frappe essentiellement le véhicule à photographier, est disposée devant la lampe flash (10).

2. Dispositif selon la revendication 1, **caractérisé en ce que** la structure est formée par un dessin croisé de bâtonnets (26,28) présentant la forme de bandes.
